# EUROPEAN PATENT SPECIFICATION

(11) **EP 4 095 520 B1**
(45) Date of publication and mention of the grant of the patent: **16.04.2025**
(21) Application number: 21176443.6
(22) Date of filing: 28.05.2021
(51) Int. Cl.: G01N 21/95

(54) **A SYSTEM FOR QUALITY CONTROL OF A PIECE OF CLOTHING**
SYSTEM ZUR QUALITÄTSKONTROLLE EINES KLEIDUNGSSTÜCKS
SYSTÈME DE CONTRÔLE DE QUALITÉ D'UNE PIÈCE DE VÊTEMENT

(43) Date of publication of application: 30.11.2022
(73) Proprietor: Decontex Holding, 8700 Tielt (BE)
(72) Inventor: VERMINCK, Tommy, 8700 Tielt (BE); MACHARIS, Zander, 8700 Tielt (BE)
(74) Representative: IP HILLS NV

(56) References cited:
- JP-A- H0 353 148
- US-A1- 2019 137 258
- US-A1- 2020 178 632

## Description

### Field of the Invention

The present invention generally relates to a system for quality control of a piece of clothing and a method for quality control of a piece of clothing.

### Background of the Invention

Pieces of commodity clothing need to meet quality requirements in order to be sold. Once sold, most of the pieces of clothing are never subjected to any further quality control. After some cycles of use and washing, the pieces of clothing are disposed once the consumer believes the piece of clothing does no longer meet their subjective requirements.

This is not true for pieces of clothing which are of technical nature or made from high performance textile material. Clothing of firemen (like fire resistant jackets and pants), of police officers (like bullet free pieces of clothing), of soldiers (like battle dresses and alike), clothing being personal protective equipment (PPE), high technological pieces of clothing like skiing outfits, and similar high technology pieces of clothing, are to meet certain quality objectives during their life cycle, even after several phases of use and cleaning. US2020178632discloses a quality control system where bladders are inserted in a garment and inflated. The garment, after this inflation, iscontrolled by means of cameras.

There is a need for a quality control system and method, which enables to check objectively to what extent the pieces of clothing still are in line with the quality requirements to be met.

### Summary of the Invention

According to a first aspect of the invention, a system for quality control of a piece of clothing is provided. The system comprises:
(a) a means for blowing control gas in a piece of clothing,
(b) an image capturing means for detecting defective location on this piece of clothing.
The means for blowing control gas is adapted to provide said control gas at a temperature of at least 20°C above ambient. The image capturing means comprises one or more thermal cameras.

The use of a control gas being at least 20°C above the ambient temperature, has as an effect that on the one hand, mechanical defects like small or larger perforations or defects can be detected with a high level of certainty, while this on the other hand without causing damage to the piece of clothing itself during the check or control. At the positions where the control gas may pass the piece of clothing, a zone with a different temperature may be detected. Also zones of the piece of clothing where e.g. the inner thermal insulation is defect or damaged, provide zones on the piece of clothing with a different temperature at the outer side.

The advantage of the system, and its method to control the quality of pieces of clothing when used, is the high degree of automatization, together with a high certainty and objectivity of detecting all defects in the piece of clothing, more than actual visible punctures and alike. Defects in the inner structure of the piece of clothing, which are not visible at the outer nor the inner side of the piece of clothing, are detectable because such damage will result in the provision of a zone on the piece of clothing with a different temperature at the outer side.

Once the possibly defective location and areas are detected, one can decide whether a detected area is inherent for the piece of clothing (e.g. seams), and/or whether this detected area is due to a failure of the piece of clothing. Such decision can be taken by means of appropriate interpretation of the data generated. As such, instructions for a later repair activity may be created, including the location of the defect, the nature and the severity of the defect.

According to some embodiments, the system further may comprise a computation means to locate the passages, to define the nature of the defect, to define the severity of the defect and/or to derive one or more quality parameters from the detected and optionally located areas of defects.

As an example, the dimension of the defective area, or the dimension of the defective area in combination with the location of the detected defective area, may not be above a given limit, optionally depending on the zone of the piece of clothing where the defective area is located.

Additionally, one may measure the volume of control gas escaping the piece of clothing. The volume of control gas escaping per time unit may not exceed a given threshold value, in order to have the piece of clothing passing the quality control. As another example, the detected and located defective areas may not be located at given zones of the piece of clothing, or the number and dimension of defective areas may not exceed a given threshold to have the piece of clothing passing the quality control. A pre-set number of quality criteria may be set for the piece of clothing, and optionally these quality criteria may differ for each zone of the piece of clothing.

Additionally or alternatively, one may measure the pressure of control gas in function of the volume of control gas escaping the piece of clothing. The pressure of control gas may not drop under a given threshold value, in order to have the piece of clothing passing the quality control.

Possibly a control gas pressure in the range of 100 to 400 Pascal gauge (i.e. above ambient pressure) may be used, such as in the range of 200 to 300 Pascal gauge.

According to some embodiments, the system further may comprise plugs for plugging the usage openings of the piece of clothing prior to blowing control gas in the piece of clothing.

Such plugs may be e.g. inflatable objects like tubes or spheres, which partially or completely closes usage openings of the piece of clothing, like arm and/or neck openings or along the lower hem for an upper clothing pieces, or leg openings and along the upper hem for trousers, pants and alike.

According to some embodiments, the image capturing means may comprise one or more thermal cameras.

The use of relatively warm control gas; like heated gas or air, is possibly the most efficient way to detect and locate defective areas of the piece of clothing. Using thermal or IR cameras, the heat which comes along with the control passing through the piece of clothing may be detected as it heats up the perimeter of the perforation to a temperature higher as compared to the encompassing zone of the outer surface of the piece of clothing. Further, the heat of the hot, heated gas may cause zones on the clothing to have a different temperature when the inner construction of the piece of clothing is no longer as originally was the case. This is in particular the case if the temperature of the heated gas or air is sufficiently above ambient, i.e. at least 20 °C above ambient or more.

According to some embodiments, the control gas may be heated air.

According to some embodiments, the control gas may have a temperature at least 30 °C above ambient. Ambient in the view of this invention is to be understood as the temperature of the air at the outer side of the piece of clothing. Typically this will be about 20°C. The temperature difference is at least 20°C, i.e. the control gas is warmer than ambient. Preferably the temperature difference is in the range of 25 to 140 °C above ambient, such as between 30 and 120 °C above ambient. Hotter gas needs to be avoided in order not to damage the material from which the piece of clothing is made. At lower temperatures, the defects may not be detectable with enough certainty as the difference between qualitatively appropriate zones and defective zones may be too low.

Preferably heated air is used. The heated air may have a relative humidity in the range of 30 to 80% relative humidity, more preferred between 40 and 75%, e.g. between 50 and 75%.

According to some embodiments, the control gas may be steam, possibly superheated steam.

According to some embodiments, the image capturing means may comprise means to make the steam flowing through said piece of clothing visible.

According to some embodiments, the control gas may be a particle loaded gas (or air), the image capturing means comprising means to make particles detectable, such as visible (e.g. light with dedicated frequency band, laser, ...) According to other embodiments, the control gas may be gas (or air) loaded with detectable molecules, the image capturing means comprising means to make presence of molecules in gas detectable (e.g. light with dedicated frequency band, laser, ...). This detecting of the particles or molecules, or the steam, may provide additional indication of the positions where the control gas can escape through the piece of clothing, hence indicate a perforation or hole in the piece of clothing.

Possibly, the image capturing means comprises thermal cameras, like infrared (IR) cameras as well as visible light cameras. The infrared (IR) cameras are used to detect and locate the control gas heating the piece of clothing differently at given zones or areas. Thermal images are made.

According to some embodiments, the image capturing means may comprise visible light cameras.

The visible light cameras (standard optical cameras) may be used to measure how much light is retroreflected by the piece of clothing during the period the piece of clothing is provided with control gas. For the latter measurement, a predefined amount of light is provided to the piece of clothing. Possibly the thermal images are made with no incident light falling on the piece of clothing. The piece of clothing may be provided in a dark room. A controlled amount of light may be provided in the dark room, while the visible light cameras measure the total amount of light retroreflected. From the data taken from the images, the total surface of retroreflecting areas may be calculated. In a similar way, the fluorescence of the piece of clothing may be measured. The visible light cameras may be calibrated with standard colours. Images of the piece of clothing are taken using incident calibrated light, possibly in intensity and colour. From data taken from the images, one may calculate the deviation of the colour of the piece of clothing in view of these standard colours.

For the measurements to be done, the cameras may be mount moveable into different positions. Additionally or alternatively, the piece of clothing may be moveably mounted, such it can take different positions in view of the cameras and/or light sources. Additional light sources may be provided to shed appropriate light during measurements under the appropriate lighting angels. This lighting equipment may as well be moveable.

According to some embodiments, the system further may comprise a computation means to locate and/or measure the defective areas and/or to derive one or more quality parameters from the detected and optionally located defective areas.

According to some embodiments, the system may comprise a computation means comprising software to convert images of said image capturing means to a 3D image of said piece of clothing.

One computation means may be provided to both locate and/or measure the defective areas and/or to derive one or more quality parameters from the detected and optionally located defective areas and convert images of said image capturing means to a 3D image of said piece of clothing.

For doing so, the image capturing means comprises preferably more than one camera, each camera making an image of the piece of clothing under a different view or angle. The combination of the images may provide a 3D image of the piece of clothing. On this 3D image, the located defective areas may be indicated. This 3D image may be used in a later stage during the reparation of defects in the piece of clothing. The image may provide to the operator visible information where the defect(s) is (are) located on the piece of clothing.

The images, optionally the 3D image, may be used to check to what extent the repair of the piece of clothing has led to the full reparation of the piece of clothing. By making a new quality check by the system according to the invention, after the repair, and comparing the images, such as the 3D images of the piece of clothing before and after this repair, the impact and/or sufficiency of the reparation may be evaluated.

According to some embodiments, the piece of clothing may first be subjected to a cleaning and/or decontamination action. Subjecting the cleaned and/or decontaminated piece of clothing to a quality check by the system according to the invention, damage caused by the cleaning and/or decontamination may be noticed. By subjecting the piece of clothing twice to a quality check by the system according to the invention, once before and once after cleaning and/or decontamination, and comparing the images, the optionally 3D images, may give information on the impact of the cleaning and/or decontamination operation to the piece of clothing.

The computation means may be adapted to derive one or more quality parameters from the detected and located defective areas. As an example, the images may be used to perform a colorimetric analysis. This may reveal greying of the piece of clothing.

According to some embodiments, the means for blowing control gas and the image capturing means may be located in a closed chamber.

This closed chamber may be a darkened room, such as a darkroom, where little or no visible light is present when the chamber is closed.

The system according to the invention may further have a human machine interface (HMI), for enabling the user to link the images with other data like identity of the piece of clothing and alike or read out the quality parameters of the checked piece of clothing.

The system according to the invention may further comprise a holding means, like a standard, holder and/or a rack to hold a piece of clothing. The piece of clothing may be hung to said holding means. This standard, holder or rack may vary for different pieces of clothing, e.g. trousers, pants, jackets, etc.

According to a second aspect of the invention, a method to control the quality of a piece of clothing is provided, the method comprising the steps of
a) providing quality control system according to any of the preceding claims;
b) providing a piece of clothing to be controlled;
c) blowing control gas in said piece of clothing at a temperature of at least 20°C above ambient;
d) detecting the temperature along at least part of the outer surface of said piece of clothing by the thermal cameras of said quality control system.

Possibly the temperature is detected along the whole outer surface of said piece of clothing.

Areas where a higher temperature is measured may indicate defective areas, where either a perforation is located, or where the inner structure of the piece of clothing is damaged. Optionally the defective area may as well be located on the piece of clothing. Optionally, the method further comprises the step of deriving quality parameters from the detected and located defective areas.

The piece of clothing may be placed on a holding means like a standard, a holder or a rack. This standard, holder or rack may vary for different pieces of clothing, e.g. trousers, pants, jackets, etc. The users' openings of the piece of clothing may be closed, e.g. by inflatable objects, such as inflatable tubes and/or spheres.

Control gas is blown in the piece of clothing. The image capturing means make images of the piece of clothing under control gas being blown, i.e. under blowing pressure. Preferably the piece of clothing is provided in a darkened room, such as a darkroom, the images made being thermal images, optionally using one or more IR cameras and using heated gas like heated air or steam. Additionally, the method may comprise the step of subjecting the piece of clothing to controlled lighting conditions, and measuring the fluorescence and/or the retroreflection of the piece of clothing.

The method may further comprise the step of deriving one or more quality parameters. The computation means may locate the defective areas and/or may provide an image of the piece of clothing, such as a 3D image, the located defective areas being indicated on this optionally 3D image. The method may further comprise the step of calculating the total retroreflection surface of the piece of clothing by the computation means. The method may further comprise the step of calculating the colour of the fluorescent zones of the piece of clothing by the computation means.

According to some embodiments, the piece of clothing may be located in a closed chamber during the blowing step.

According to some embodiments, the piece of clothing may be a piece of protective clothing. The piece of clothing may be a piece of fireman protective clothing.

According to some embodiments, the control gas may be heated air.

Thermal imaging is particularly performed e.g. for checking the integrity of a thermal membrane, being embedded in the piece of clothing as a kind of thermal barrier, e.g. in jackets of firemen. Such thermal membrane is for example taped, and thus where the taping would no longer be fixed and peels off, this could be visualized this way as here control gas would escape through the piece of clothing or at least heat the zone more at the outer surface of the piece of clothing. Infrared (IR) cameras are for example placed in such angles that a 3D image can be generated, giving a first set of data or images over a given period of measurement. The application (software) may compare this data or images and calculate the area which is defect. This area of defects may be compared to the maximum allowable leakage or area and may output a pass or fail to a human machine interface (HMI) of the system.

During a further measurement, when both thermal (IR) cameras and visible light cameras are provided in the image capturing means and the piece of clothing is provided in a dark room, the total fluorescent area and colour of a piece of clothing, in simulated daylight, hence its visibility in daylight can be analysed, whereas in a third measurement, the total retro-reflective area of the piece of clothing, or else visibility at night may be inspected (NBN EN ISO 20471). Again, pass or fail outputs can be reported back to the HMI depending on the results of these measurements.

Further, a system according to the first aspect of the invention is used to assess the quality of pieces of clothing, this use being the third aspect of the invention. The piece of clothing may be pants, trousers, jackets, overalls, coveralls, sweaters and alike. Preferably the pieces of clothing are protective pieces of clothing, like clothing of firemen, police officers, soldiers, personal protective equipment (PPE), high technological pieces of clothing like skiing outfits, and alike.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief Description of the Drawings

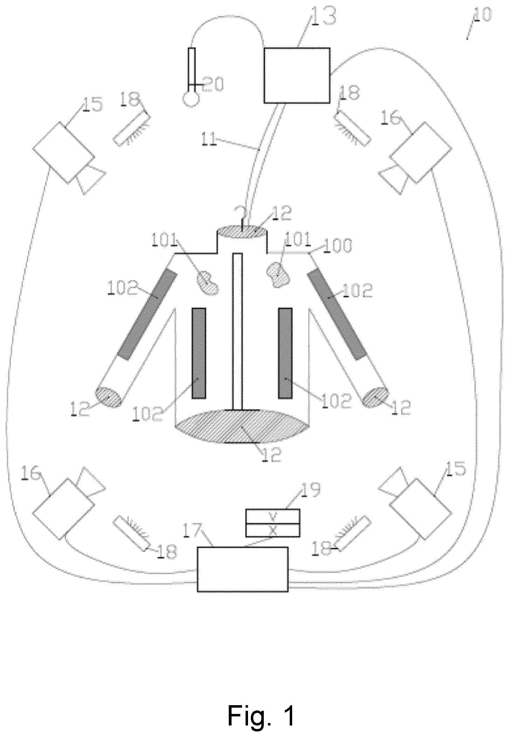

Fig. 1 illustrates schematically a system for quality control of a piece of clothing according to the invention.

### Detailed Description of Embodiment(s)

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

A system 10 for quality control of a piece of clothing is schematically shown in figure 1. A fireman's jacket 100 is hung on a hanger 11 and the openings at the collar, arm ends and hem at the belly are closed by inflatable objects 12. The piece of clothing 100 is completely closed and in a state as it would be worn by a fireman. By means of a control gas generator 13, hot air at a temperature of at least 20°C above the ambient, e.g. at a temperature of 60°C, is blown into the jacket 100 via tubing 14. The relative humidity is set to 50%. Possibly the control gas generator 13 is coupled to a thermometer 20 to set the temperature of the control gas on a given number of degrees above the ambient. The pressure is set at 200 to 300 Pascal above ambient pressure and the volume of control gas blowing in is measured. A plurality of IR cameras 15, of which two are shown in figure 1, make images from different angles such a complete view of the IR images of the jacket 100 can be obtained and calculated by computation means 17. The computation means 17 makes a thermal 3D image from the jacket 100. On this 3D image, two defective areas 101 are visible. The temperature of these areas raises to a higher temperature as the other zones of the jacket 100.

The system further comprises a plurality of standard optical cameras 16 are provided, of which only two are shown in figure 1. Upon switching the lighting means 18, the standard optical cameras 16 make images of the jacket. From these images, the computation means 17 can calculate the total surface of the retroreflective zones 102 of the jacket 100. The computation means 17 can also generate information on the fluorescent colour of the jacket.

The information on the position of the defective areas 101, the 3D image, the fluorescent colour of the jacket 100 and/or the total surface of the retroreflective zones 102 is communicated to the user via a human machine interface 19. The information given may be reduced to a simple pass/fail indication, may comprise a complete listing of all properties measured, or any partially detailed report in between these two possibilities.

At least the piece of clothing, the hanging means, the thermometer, the IR and standard optical cameras 15 and 16 and the lighting means 18 are positioned in a darkroom. As such, ambient light will not influence the images taken by the cameras.

It is to be understood that although preferred embodiments and/or materials have been discussed for providing embodiments according to the present invention, various modifications or changes may be made without departing from the scope as defined in the appended claims.

## Claims

1. A system (10) for quality control of a piece of clothing (100), comprising:
(a) a means (13) for blowing control gas in said piece of clothing;
(b) an image capturing means for detecting defective location on said piece of clothing;
wherein said means for blowing control gas is adapted to provide said control gas at a temperature of at least 20°C above ambient, said image capturing means comprises one or more thermal cameras (15).

2. A system according to claim 1, wherein the system further comprises plugs (12) for plugging the usage openings of the piece of clothing prior to blowing control gas in said piece of clothing.

3. A system according to any one of the claims 1 to 2, wherein said control gas has a temperature at least 30 °C above ambient.

4. A system according to any one of the claims 1 to 3, wherein said control gas is steam, possibly superheated steam.

5. A system according to claim 4, wherein said image capturing means comprises means to make said steam flowing through said piece of clothing visible.

6. A system according to any one of the claims 1 to 5, wherein said image capturing means comprises visible light cameras (16).

7. A system according to any one of the preceding claims, wherein said system further comprises a computation means (17) to locate and/or measure the defective areas and/or to derive one or more quality parameters from the detected and optionally located defective areas.

8. A system according to any one of the preceding claims, wherein said system comprises a computation means comprising software to convert images of said image capturing means to a 3D image of said piece of clothing.

9. A system according to any one of the preceding claims, wherein said means for blowing control gas and said image capturing means are located in a closed chamber.

10. A method to control the quality of a piece of clothing, comprising
a) providing quality control system (10) according to any of the preceding claims;
b) providing a piece of clothing (100) to be controlled;
c) blowing control gas in said piece of clothing at a temperature of at least 20°C above ambient;
d) detecting the temperature along at least part of the outer surface of said piece of clothing by the thermal cameras of said quality control system.

11. A method according to claim 10, wherein said piece of clothing located in a closed chamber during the blowing step.

12. A method according to any one of the claims 10 to 11 wherein said piece of clothing is a piece of protective clothing

13. A method according to claim 12, wherein said piece of clothing is a piece of fireman protective clothing.

14. A method according to any one of the claims 10 to 13 wherein said control gas is heated air.

## Patentansprüche

1. System (10) zur Qualitätskontrolle eines Kleidungsstücks (100), umfassend:
(a) ein Mittel (13) zum Einblasen von Kontrollgas in das Kleidungsstück;
(b) ein Bildaufnahmemittel zum Erkennen einer fehlerhaften Stelle auf dem Kleidungsstück;
wobei das Mittel zum Einblasen von Kontrollgas dazu ausgelegt ist, das Kontrollgas bei einer Temperatur von mindestens 20 °C über der Umgebungstemperatur bereitzustellen, wobei das Bildaufnahmemittel eine oder mehrere Wärmekameras (15) umfasst.

2. System nach Anspruch 1, wobei das System ferner Stopfen (12) zum Verstopfen der Benutzungsöffnungen des Kleidungsstücks vor dem Einblasen von Kontrollgas in das Kleidungsstück umfasst.

3. System nach einem der Ansprüche 1 bis 2, wobei das Kontrollgas eine Temperatur aufweist, die mindestens 30 °C über der Umgebungstemperatur liegt.

4. System nach einem der Ansprüche 1 bis 3, wobei das Kontrollgas Dampf, möglicherweise überhitzter Dampf, ist.

5. System nach Anspruch 4, wobei das Bildaufnahmemittel Mittel umfasst, um den durch das Kleidungsstück strömenden Dampf sichtbar zu machen.

6. System nach einem der Ansprüche 1 bis 5, wobei das Bildaufnahmemittel Kameras (16) für sichtbares Licht umfasst.

7. System nach einem der vorhergehenden Ansprüche, wobei das System ferner ein Berechnungsmittel (17) umfasst, um die fehlerhaften Bereiche zu lokalisieren und/oder zu messen und/oder um einen oder mehrere Qualitätsparameter aus den erkannten und optional lokalisierten fehlerhaften Bereichen abzuleiten.

8. System nach einem der vorhergehenden Ansprüche, wobei das System ein Berechnungsmittel umfasst, das Software umfasst, um Bilder des Bildaufnahmemittels in ein 3D-Bild des Kleidungsstücks umzuwandeln.

9. System nach einem der vorhergehenden Ansprüche, wobei sich das Mittel zum Einblasen von Kontrollgas und das Bildaufnahmemittel in einer geschlossenen Kammer befinden.

10. Verfahren zum Kontrollieren der Qualität eines Kleidungsstücks, umfassend
a) Bereitstellen eines Qualitätskontrollsystems (10) nach einem der vorhergehenden Ansprüche;
b) Bereitstellen eines zu kontrollierenden Kleidungsstücks (100);
c) Einblasen von Kontrollgas in das Kleidungsstück bei einer Temperatur von mindestens 20 °C über der Umgebungstemperatur;
d) Erkennen der Temperatur entlang mindestens eines Teils der äußeren Oberfläche des Kleidungsstücks durch die Wärmekameras des Qualitätskontrollsystems.

11. Verfahren nach Anspruch 10, wobei sich das Kleidungsstück während des Einblasschritts in einer geschlossenen Kammer befindet.

12. Verfahren nach einem der Ansprüche 10 bis 11, wobei das Kleidungsstück ein Schutzkleidungsstück ist.

13. Verfahren nach Anspruch 12, wobei das Kleidungsstück ein Feuerwehrschutzkleidungsstück ist.

14. Verfahren nach einem der Ansprüche 10 bis 13, wobei das Kontrollgas erwärmte Luft ist.

## Revendications

1. Système (10) de contrôle de qualité d'une pièce de vêtement (100), comprenant :
(a) un moyen (13) pour souffler du gaz de contrôle dans ladite pièce de vêtement ;
(b) un moyen de capture d'image pour détecter un emplacement défectueux sur ladite pièce de vêtement ;
ledit moyen pour souffler du gaz de contrôle étant adapté pour fournir ledit gaz de contrôle à une température supérieure d'au moins 20°C à la température ambiante, ledit moyen de capture d'image comprenant une ou plusieurs caméras thermiques (15).

2. Système selon la revendication 1, ledit système comprenant en outre des bouchons (12) pour boucher les ouvertures d'utilisation de la pièce de vêtement avant de souffler du gaz de contrôle dans ladite pièce de vêtement.

3. Système selon l'une quelconque des revendications 1 à 2, ledit gaz de contrôle comportant une température supérieure d'au moins 30°C à la température ambiante.

4. Système selon l'une quelconque des revendications 1 à 3, ledit gaz de contrôle étant de la vapeur, éventuellement de la vapeur surchauffée.

5. Système selon la revendication 4, ledit moyen de capture d'image comprenant un moyen pour rendre ladite vapeur s'écoulant à travers ladite pièce de vêtement visible.

6. Système selon l'une quelconque des revendications 1 à 5, ledit moyen de capture d'image comprenant des caméras à lumière visible (16).

7. Système selon l'une quelconque des revendications précédentes, ledit système comprenant en outre un moyen de calcul (17) pour localiser et/ou mesurer les zones défectueuses et/ou pour dériver un ou plusieurs paramètres de qualité à partir des zones défectueuses détectées et éventuellement localisées.

8. Système selon l'une quelconque des revendications précédentes, ledit système comprenant un moyen de calcul comprenant un logiciel pour convertir des images dudit moyen de capture d'image en une image 3D de ladite pièce de vêtement.

9. Système selon l'une quelconque des revendications précédentes, ledit moyen de soufflage de gaz de contrôle et ledit moyen de capture d'image étant situés dans une chambre fermée.

10. Procédé de contrôle de la qualité d'une pièce de vêtement, comprenant
a) la fourniture d'un système de contrôle de qualité (10) selon l'une quelconque des revendications précédentes ;
b) la fourniture d'une pièce de vêtement (100) à contrôler ;
c) le soufflage du gaz de contrôle dans ladite pièce de vêtement à une température supérieure d'au moins 20°C à la température ambiante ;
d) la détection de la température le long d'au moins une partie de la surface externe de ladite pièce de vêtement par les caméras thermiques dudit système de contrôle de qualité.

11. Procédé selon la revendication 10, ladite pièce de vêtement étant située dans une chambre fermée durant l'étape de soufflage.

12. Procédé selon l'une quelconque des revendications 10 à 11, ladite pièce de vêtement étant une pièce de vêtement de protection.

13. Procédé selon la revendication 12, ladite pièce de vêtement étant une pièce de vêtement de protection des pompiers.

14. Procédé selon l'une quelconque des revendications 10 à 13, ledit gaz de contrôle étant de l'air chauffé.
